Europäisches Patentamt

European Patent Office

Office européen des brevets

(19)

(11) Publication number: **0 270 363**
**A2**

# (12) EUROPEAN PATENT APPLICATION

(21) Application number: 87310636.3

(51) Int. Cl.⁴: **G 01 N 1/28**

(22) Date of filing: 03.12.87

(30) Priority: 04.12.86 GB 8629045
07.10.87 GB 8723558

(43) Date of publication of application:
08.06.88 Bulletin 88/23

(84) Designated Contracting States:
AT BE CH DE ES FR GB GR IT LI LU NL SE

(71) Applicant: **UNIVERSITY OF LEICESTER**
**University Road**
**Leicester (GB)**

(72) Inventor: **Lauder, Ian The Department of Pathology**
**Clinical Sciences Bldg. Leicester Royal Infirmary**
**PO Box 65 Leicester LE2 7LX (GB)**

**Warford, Anthony The Department of Pathology**
**Clinical Sciences Bldg. Leicester Royal Infirmary**
**PO Box 65 Leicester LE2 7LX (GB)**

**Rae, Malcom J. L. The Department of Pathology**
**Clinical Sciences Bldg. Leicester Royal Infirmary**
**PO Box 65 Leicester LE2 7LX (GB)**

**MaWhinney, William Henry Brian**
**7 Harley Terrace**
**Gosforth Newcastle-upon-Tyne (GB)**

(74) Representative: **McNeight, David Leslie et al**
**McNeight & Lawrence Regent House Heaton Lane**
**Stockport Cheshire SK4 1BS (GB)**

(54) Apparatus for reactions with liquids.

(57) Apparatus for treating specimens with liquids particularly suitable for use in histopathology, haematology or cytology comprises a plurality of reactions chambers in a housing arranged to be closed by a cover member comprising a slide carrying a specimen, the housing having individual channels to supply liquid to and remove it from each chamber, and computer controlled valve means controlling the supply of liquids to the chambers from pots pre-loaded with reagent liquids. O-rings maintain particularly fluid-tight seals enabling adjacent chambers to be used for different treating specimens and eliminating reagent wastage through leakage.

EP 0 270 363 A2

**Description**

APPARATUS FOR REACTIONS WITH LIQUIDS

This invention relates to apparatus for carrying out reactions with liquids.

In GB 1 454 365 (now lapsed) is described an apparatus for treating slide specimens, for example, specimens used in histopathology, haematology or cytology.

The slide specimens were supported on a slide carrier so as to form a recess into which a treatment liquid, such as a strain, could be introduced so as to contact the specimen. The liquid was supplied to a plurality of recesses covered by specimen-carrying slides along a liquid supply channel and collected therefrom in a collection channel.

Various problems were encountered with the apparatus. For example, the slide carrier was formed of a glass or Perspex (Registered Trade Mark) block with a recessed ground upper surface. Problems were encountered with the build up of deposits on the ground glass or Perspex, which led to impaired sealing of the microscope slide on to the recess.

There was also perceived a need for more versatility and greater economy for example of expensive reagents than the apparatus provided.

The present invention seeks to provide an apparatus which is more versatile and economical to operate than the apparatus of the above mentioned patent.

The invention provides apparatus for treating a specimen with liquid comprising a plurality of reaction chambers in a housing, each of said chambers being arranged to be closed by a cover member and to be provided with individual channels formed adjacent each chamber to supply liquid thereto, flow through each of said chambers being controlled by individually operable valves, there being further provided means to recirculate used liquid to a supply thereof.

Advantageously, the specimen may be carried on the underside of a slide, said housing being comprised by a slide carrier. In such an arrangement the recesses are formed in a plane surface of the carrier and are conveniently closed by the slide.

Preferably, the liquids may be supplied from a plurality of supply sources capable of partaking of an indexing movement towards and away from a delivery point.

In an example of the invention, applicable to the treatment of a specimen on a slide with two or more liquids in sequence, an arrangement may be provided to deliver liquids to the recesses in the slide carrier so that the specimen is treated with the liquids in a predetermined sequence and with each liquid for a predetermined time.

The arrangement referred to may comprise a support arrangement for providing a support for at least one series of containers of liquid for treatment of the slide specimen, in a continuous loop, hereinafter referred to as a carousel means operative when the carousel is received on the support arrangement to move the carousel, means operative after the container on the carousel has been subjected to a predetermined displacement during an indexing movement to prevent further carousel movement and means operative when further carousel movement has been prevented to withdraw liquid from the container and to deliver withdrawn liquid to the recesses in the slide carrier. The arrangement may be provided with means for terminating withdrawal of liquid from a container in the carousel after a predetermined time, means operative when liquid withdrawal has been terminated to cause movement of the carousel, means operative when the next selected container in the series has been subjected to a predetermined displacement to prevent further carousel movement and means operative when further carousel movement has been prevented to withdraw liquid from the said next container and to deliver withdraw liquid to the recesses in the slide carrier.

Depending on the operator's requirements, after the slide adjacent a recess has suffered exposure to the liquid for the desired time, the liquid may be removed to waste or reclaimed to its original container on the carousel.

In the examples described below, the liquid is circulated from the regent carousel by means of a peristaltic pump. Reclamation of the liquid is also achieved by the operation of the pump.

As each recess is supplied with liquids, individually, the specimen may be subjected to a different series of reagents for different exposure times simultaneously with treatment of the other recesses.

The present invention also provides apparatus -not necessarily confined to the purposes of the earlier patent referred to - which avoids the problem of the build-up of deposits aforementioned.

The invention in this aspect comprises apparatus for carrying out reactions with liquids comprising reaction chamber means formed between separable, adjacent surfaces by O-ring seal means pressed between the surfaces and liquid inlet and outlet means.

The apparatus may comprise a plurality of separate reaction chambers formed between two separable, adjacent surfaces by O-ring seal means.

At least one of said surfaces may be of a glass plate and one of said surfaces may be profiled to locate O-ring seals thereon.

Said chamber means may be formed on one side by a standard microscope slide, the O-ring seal means being so dimensioned as to be contained within the edges of the slide.

The inlet and outlet means may be in the same surface.

The O-ring seal means may be of silicone rubber or like material.

Embodiments of apparatus for carrying out reactions with liquids will now be described with reference to the accompanying drawings, in which :-

Figure 1 is part plan view of an upper portion of one embodiment of apparatus of the invention;

Figure 2 is a part plan view of the apparatus of Figure 1 at a lower level, showing the channels for temperature controlled fluids to allow the slides, recesses and reagents to be heated or cooled;

Figure 3 is a cross section taken along line III-III of Figures 1 and 2;

Figure 3a is an enlargement of a fragmentary area of Figure 3;

Figure 4 is a cross section along line IV-IV of Figure 1;

Figure 5 is a cross section taken along line V-V of Figure 1;

Figure 6 is a flow diagram of the apparatus.

Figure 7 is an elevation of another embodiment of reaction chamber means;

Figure 8 is a section on the line VIII-VIII of Figure 7;

Figure 9 is a detail from Figure 8 drawn to a larger scale;

Figure 10 is a section on the line X-X of Figure 7;

Figure 11 is a section through another form of O-ring seal; and

Figure 12 is a plan view of an automatic staining apparatus incorporating the reaction chamber means illustrated in Figures 7 to 11.

The drawings illustrate apparatus for carrying out reactions with liquids, in particular, in this case, for carrying out treatment of slide-mounted specimens used in histopathology, haematology or cytology with liquid, for example, a stain.

In such treatment, multiple operations, using different liquids, are often carried out on individual specimens, and it is highly desirable to automate the process. Many of the reagents used are expensive and so it is desired to use them only in small quantities and often to be able to recover them after use.

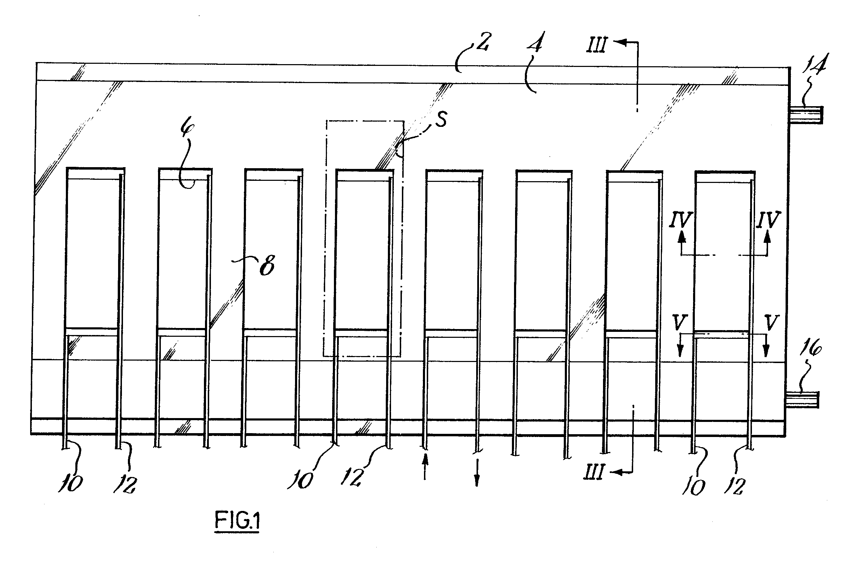

The housing of the apparatus illustrated in Figures 1 to 6 comprises the slide carrier shown in Figures 1, 2, 3 and 3a which includes an elongate block 2, formed of glass in the present example, having an upper plane surface 4 in which there are formed a series of eight rectangular recesses 6 spaced apart by bridge pieces 8 and having depths of about 1 mm. The upper faces of the bridge pieces are flush with the surface 4 of the block.

Stainless steel inlet and outlet tubes 10 and 12 respectively are provided for connection of each recess 6 to a supply of liquid reagent. These tubes are connected to a flow control system in the flow of solenoid operated valves and a peristaltic pump arrangement to ensure the supply of the liquid in an even and controlled manner.

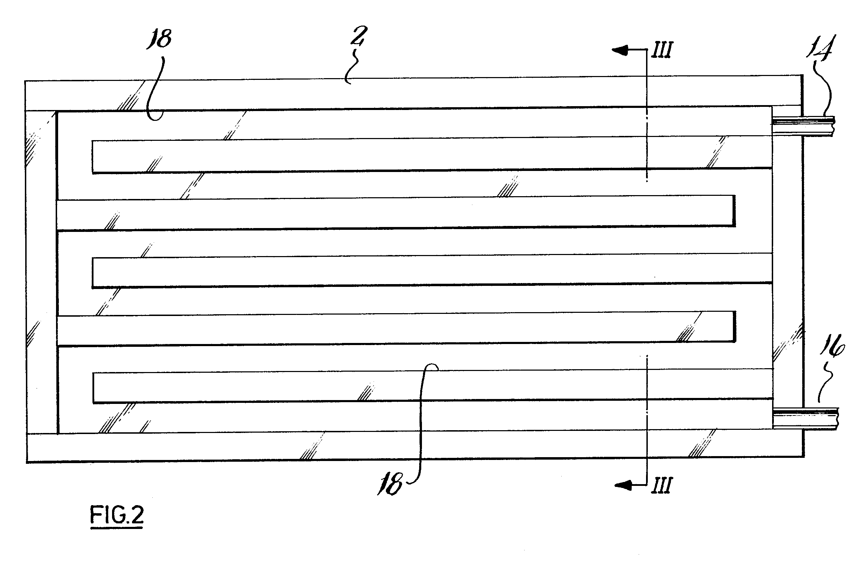

Figure 2 shows the temperature control system of the apparatus, cooling or heating liquid being circulated, through inlet 14 and outlet 16, to a serpentine chamber 18 which extends beneath the area occupied by the reaction recess 6.

Slides carrying specimens to be treated are laid inverted over the recesses so that each slide completely covers a recess. Liquid from each stainless steel tube 10 is drawn by suction from the passage 18 through the recess under the slide, thereby treating the specimen thereon, and eventually reaches the output stainless steel tube 12.

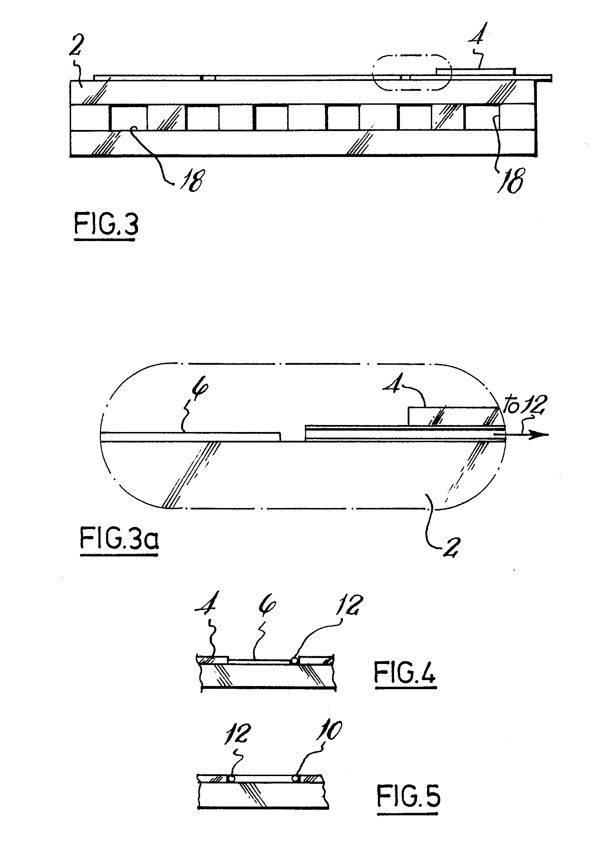

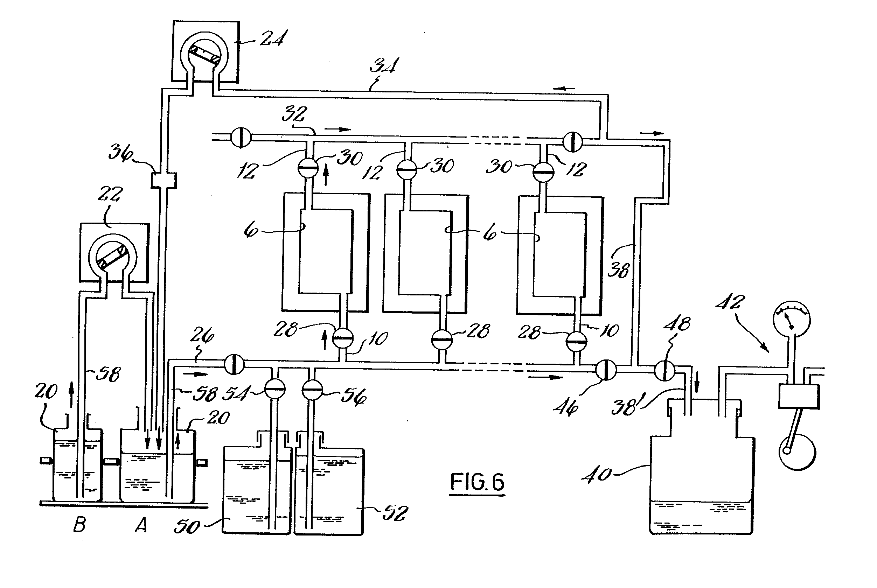

The slide carrier is shown more clearly in Figures 4 and 5 which illustrates the glass block 2 formed having a ground upper plane surface 4. The recess 6 formed in the plane surface 4 has a depth of approximately 1 mm. One inlet tube 10 and outlet tube 12, both made of stainless steel are shown which enter the recess 6 for delivery of reagent to the recess and for collection of used reagent therefrom, respectively.

It will be appreciated that the flow of liquid in tubes 10 and 12 is controlled by solenoid operated pinch valves to be described below.

In use, a slide S carrying a specimen to be treated is laid inverted over the recess 6 to completely cover it, the position of a 3" by 1" (70 mm by 25mm) slide so placed being shown in Figure 1 in dotted lines. Liquid for the treatment is then drawn into the recess through the inlet tube 10 by the application of suction to the outlet tube 12.

In use, the slide carrier described above is employed in conjunction with the arrangement shown in the diagram of Figure 6.

The support arrangement for a series of containers 20 of liquid for treatment of the slide specimen is arranged in a so-called carousel comprising sixteen outer positions at A and sixteen inner position, B. It is thus possible to arrange as required admixtures of solutions from the outer positions B to containers in the inner positions A. The selection of containers 20 is according to a pre-arranged sequence and is entirely computer controlled.

Thus if the liquid in a container 20 in position B is required for mixing it is pumped in a desired quantity to the container in position A by means of a first peristaltic pump 22.

From the container 20 at A, liquid is drawn by the action of a second peristaltic pump 24 into a line 26 which supplied the liquid to all eight inlet tubes 10 of the reaction recesses 6 (only three shown in Figure 6). Selected recesses 6 may be omitted from the flow by means of solenoid operated pinch valves 28 on lines 10 and similar valves 30 on lines 12 which isolated the appropriate recesses 6 as required.

Thus various recesses may be subjected to a different liquid or selection of liquids as requested. Conveniently, a record is thus readily available of the sequences employed.

In the apparatus reagent liquid leaving the recess 6 through tubes 12 joins a line 32 which leads either to a return line 34 to be pumped via a filter 36 back to the container 20 at A to a waste line 38 to disposal receptacle 40 attached to a vacuum pump arrangement indicated at 42, according to the settings of motorised valves 46 and 48 on lines 38, 26 and 38'.

Should it be required for the apparatus to be supplied with a reagent other than those available in the containers of the carousel, for example distilled water or phosphate buffered saline solution, further containers 50 and 52 may readily be introduced into the flow circuit under controlled of valves 54 and 56 respectively.

As mentioned above the entire operation is computer controlled.

A computer controls the apparatus through a computer interface and includes a timing system to give accurate control of the process stages.

The staining machine as explained above is controlled by a series of solenoid pinch valves. Mains powered synchronous motors drive the peristaltic pumps, the vacuum pump, rotate the reagent carousel, and raise and lower dipper tubes, 58, into the reagents. These power devices are switched by the computer interface through isolating opto-couplers for the mains devices, and sensors on various parts of the machine are interrogated by the interface to detect specific conditions in the machine.

Each individual slide has its reagent reaction schedule stored in a series of "strings" describing the desired reagent treatment, time in the reagent, and temperature. The strings are constructed and modified by a programme which stores the finished technique allowing it to be called up as and when required under its specific technique name for use in the staining programme. Each reagent schedule in the present example may have up to 85 individual steps in it and last up to 99 hours each or for as short a period as a few seconds. The temperature may be varied for each stage within certain limitations but all slides are subjected to the same temperature at a particular time. Reagents in the apparatus may be maintained at a controlled temperature, typically 4°C. It will be understood that the temperature conditions may be varied as described by computer control.

With computer control, it is possible to treat automatically a number of different specimens with different series of liquids for specified durations all in a single piece of laboratory apparatus. In the apparatus illustrated in Figure 12, a number of reagents are loaded into pots 161 on a carousel 162 which rotates under the control of a programmed computer 163 until a selected pot 161 is at a pumping station 164. A dipper tube 165 is lowered into the pot 161 and reagent sucked out by peristaltic pump means (not shown) and fed through valve means 166 to a reaction chamber in reaction chamber means 167 illustrated in more detail in the other Figures.

The reaction chamber means 167 includes a number - as illustrated, eight - of individual reaction chambers each adapted to hold a different microscope slide-mounted specimen.

Since different treatments using different reagents will be carried out on different specimens simultaneously, it is desirable that the individual reaction chambers are liquid tight to avoid contamination of adjacent chambers - also to avoid wastage of expensive reagents.

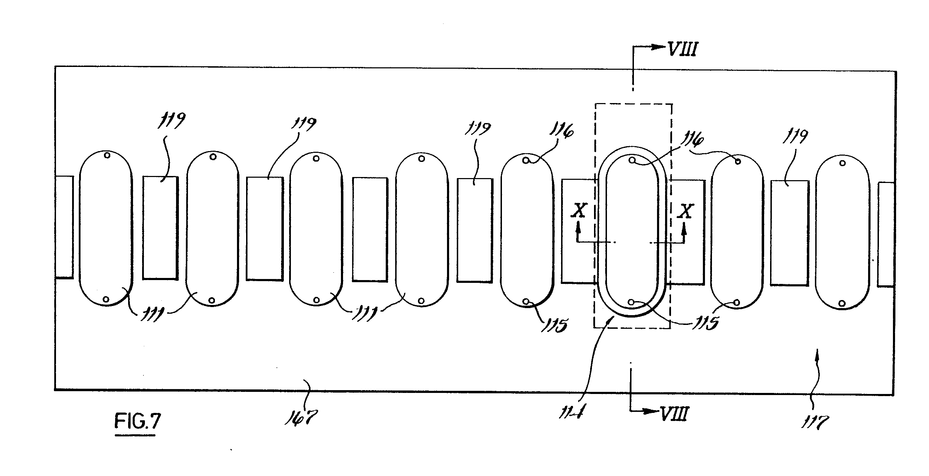

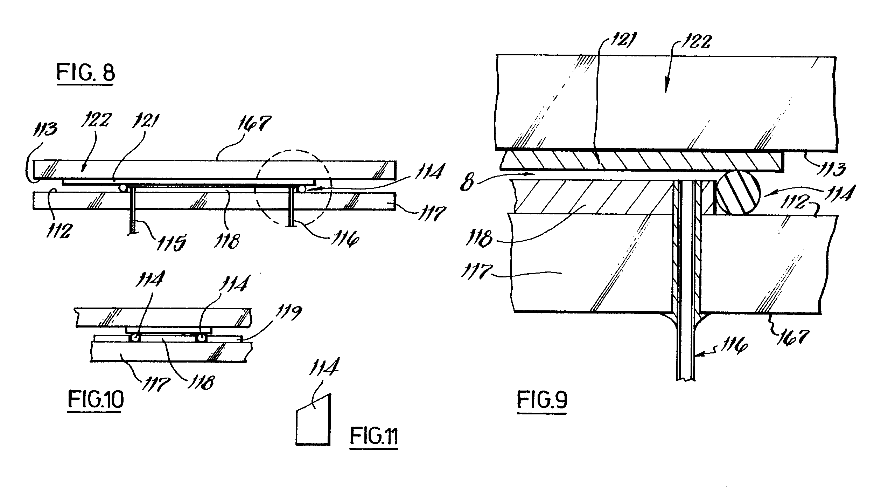

Figures 7 to 12 illustrate reaction chambers III formed between separable, adjacent surfaces 112, 113 by O-ring seal means 14 pressed between the surfaces 112, 113 and liquid inlet and outlet means 115, 116.

One of the surfaces, 112, is of a glass block or plate 117 which is profiled to locate the O-ring seals 14 thereon. The block or plate 117 has raised lands 118 around which the O-ring seals 114 fit and intermediate raised retaining areas 119 separating the chambers.

The O-ring seals 114 fit snugly around the raised lands 118 (which may be adhesively secured to a flat face of the block or plate 117) and are so dimensioned that a standard microscope slide 21 (3" × 1" or 7.6 mm × 2.5 mm) will cover the O-ring seal 114.

The surface 113 is simply a flat face of another glass block or plate 122.

When the blocks or plates 117 and 122 are pressed together with slides 121 in position, the seals 114 hold the slides spaced from the raised lands 118 by about 0.5 mm.

Inlet and outlet tubes 115, 116 of e.g. stainless steel are fixed in the block or plate 117 e.g. by an epoxy adhesive.

The blocks or plates 117, 122 are pressed together by any convenient means such as spring clamps (not shown).

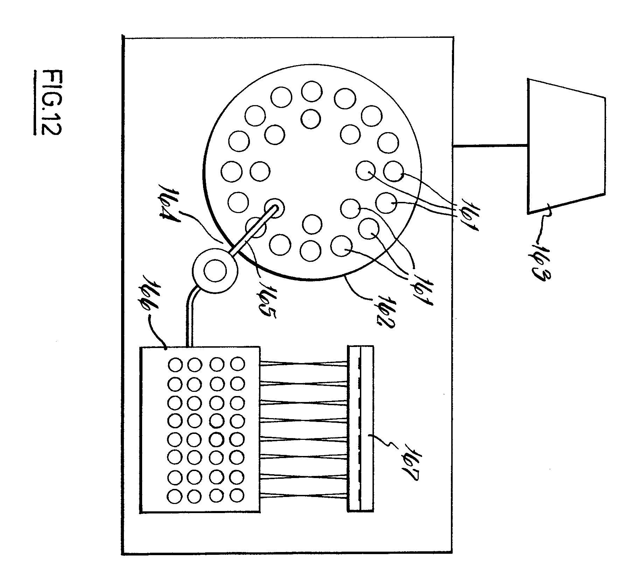

Figure 11 illustrates a different form of O-ring having a non-circular cross-section.

The apparatus illustrated has been found to operate in a working environment without any tendency to leak or to waste reagents and to provide convenient reaction chamber means with ready interchange of slide-mounted specimens. O-rings 114 of silicone material do not appear to develop undue wear despite constant use, and no special slides - just regular laboratory specimen slides - are needed to obtain good sealing.

By keeping tubing inner diameters small the amounts of expensive reagents needed can be kept cllrrespondingly small and the apparatus can be operated, on account of the fluid-tightness of the O-ring seals in particular and the layout and operational flexibility of the apparatus in general, to process different specimens on adjacent slides with different reagents according to different treatment specifications as to duration of treatment and number of treatment operations, all under computer control so that the operations are carried out automatically without operator intervention except for the initial program specification and the loading of the reagents into the carousel pots. This loading can, of course, be carried out under computer prompting to avoid the possibility of loading error.

## Claims

1. Apparatus for treating a specimen with a liquid comprising a plurality of reaction chambers in a housing, characterized by each of said chambers being arranged to be closed by a cover member and to be provided with individual channels formed adjacent each chamber to supply liquid thereto, flow through each of said channels being controlled by individually operable valves, there being further provided means to recirculate used liquid to a supply thereof.

2. Apparatus according to claim 1, characterized in that the specimen is carried on the underside of a slide, said housing being comprised by a slide carrier.

3. Apparatus according to claim 2, characterized in that the recesses are formed in a plane surface of the carrier and are closed by the slide.

4. Apparatus according to any one of claims 1 to 3, characterized in that the liquids are supplied from a plurality of supply sources capable of partaking of an indexing movement towards and away from a delivery point.

5. Apparatus according to any one of claims 1 to 4, applicable to the treatment of a specimen on a slide with two or more liquids in sequence, characterized by comprising an arrangement to deliver liquids to the recesses in the slide carrier so that the specimen is treated with liquids in a predetermined sequence and with each liquid for a predetermined time.

6. Apparatus according to claim 5, characterized by comprising a support arrangement for providing a support for at least one series of containers of liquid for treatment of the slide specimen, in a continuous loop or a carousel means operative when the carousel means are received on the support arrangement to move the said carousel means, means operative after the container on the carousel means has been subjected to a predetermined displacement during an indexing movement to prevent further movement of the carousel means and means operative when such further movement has been prevented to withdraw liquid from the container and to deliver such withdraw liquid to the recesses in the slide carrier.

7. Apparatus according to claim 6, characterized by being provided with means for terminating withdrawal of liquid from a container after a predetermined time, means operative when liquid withdrawal has been terminated to cause movement of the carousel means, means operative when the next selected container in the series has been subjected to a predetermined displacement to prevent further movement of the carousel means, and means operative when further carousel movement has been prevented to withdraw liquid from the said next container and to deliver withdraw liquid to the recesses in the slide carrier.

8. Apparatus for carrying out reactions with liquids characterized by comprising reaction chamber means formed between separable, adjacent surfaces by O-ring seal means pressed between the surfaces and liquid inlet and outlet means.

9. Apparatus according to claim 8, characterized by comprising a plurality of separate reaction chambers formed between two separable, adjacent surfaces by O-ring seal means.

10. Apparatus according to claim 8 or claim 9, characterized in that at least one of said surfaces is of a glass plate.

11. Apparatus according to any one of claims 8 to 10, characterized in that one of said surfaces is profiled to locate O-ring seal means thereon.

12. Apparatus according to any one of claims 8 to 11, characterized in that said chamber means are formed on one side by a standard microscope slide, the O-ring seal means being so dimensioned as to be contained within the edges of the slide.

13. Apparatus according to any one of claims 8 to 12, characterized in that inlet and outlet means are in the same surface.

14. Apparatus according to any one of claims 8 to 13, characterized in that said O-ring seal means are a silicone rubber.

FIG.1

FIG.2

FIG.3

FIG.3a

FIG.4

FIG.5

FIG.6

FIG.7

FIG. 8

FIG.10

FIG.11

FIG.9

0270363

0270363

FIG.12